# EUROPEAN PATENT APPLICATION

(11) **EP 4 834 112 A1**
(43) Date of publication of application: **04.11.2026**
(21) Application number: 25173618.7
(22) Date of filing: 30.04.2025
(51) Int. Cl.: A22C 9/00, A22C 17/00, A23B 4/28, A23L 13/72

(54) **INJECTOR APPARATUS WITH INJECTATE COLLECTING CONTAINER**

(71) Applicant: Günther Maschinenbau GmbH, 64859 Eppertshausen (DE)
(72) Inventor: Jäckel, Andreas, 64850 Schaafheim (DE)
(74) Representative: Eisenführ Speiser

(57) **Abstract**

The present invention relates to an injector apparatus (100) for injecting an injectate, like brine, into a food product. The apparatus (100) comprises a frame work (10), at least one injector module (IM), supported by the frame work (10), a conveying module, also supported by the frame work (10), for conveying a food product to be treated to the injector module (IM) and discharging the treated food product from the injector module (IM), and an injectate collecting device (30) for at least collecting injectate escaping from the food product while being treated. In the inventive injector apparatus (100), the injectate collecting device (30) includes an injectate collecting container (31) being removable mounted to the frame work (10).

## Description

The present invention relates to an injector apparatus, in particular to an injector apparatus for injecting an injectate, like brine, into a food product. The injector comprises as main components a frame work, at least one injector module supported by the frame work, and at least one conveying module for conveying a food product to be treated to the injector module and discharging the treated food product from the injector module, preferably wherein the conveying module is also supported by the frame work.

In practice, injector apparatuses are known, for injecting an injectate, such as brine, into a food product, like meat or fish. Such an apparatus or injector can include a conveyor for conveying the food product to be treated through the injector, and an injector head arranged above the conveyor, which includes a plurality of injection needles for injecting an injectate into the food product provided below the injection head on the conveyor. The injector head can be moved reversibly towards the food product such that the needles can penetrate the food product in order to deliver the injectate into the product.

From DE 43 12 946 A1, an injection apparatus is known, in which food products are fed through said injector apparatus by a belt conveyor arranged below a needle head.

Usually, the conveyor is arranged in an approximately U-shaped tunnel for directing injectate or brine splashes downwards or escaping from the food product or the injection needles when being pulled out of the food product, and for preventing the injectate to spray into the environment. The U-shaped tunnel, or injection tunnel, has a bottom portion in the form of a drainage channel, with a drainage connector, for discharging the injectate into a collecting tank for further processing. Such an injection machine is known from EP 4 272 560 A1.

These known injection apparatuses are of complex design, with the conveyor and the U-shaped tunnel being fixedly mounted to the frame work of injection apparatus. Cleaning and maintenance of such apparatuses is time consuming and cumbersome.

Thus, it is an object of the present invention to provide an injection apparatus for treating food products, by which the above mentioned drawbacks may be overcome, and handling and cleaning of which is simplified.

According to the present invention, there is provided an injector apparatus for injecting an injectate, like brine, into a food product. The apparatus comprises a frame work, at least one injector module, supported by the frame work, at least one conveying module for conveying a food product to be treated to the injector module and discharging the treated food product from the injector module, and at least one injectate collecting device for at least collecting injectate escaping from the food product while being treated. The conveyor module can also be supported by the frame work.

In the inventive injector apparatus, the injectate collecting device includes at least one injectate collecting container or drawer being removable mounted to the frame work. The injectate collecting container can be moved reversibly between an operating or collecting position, which is the working position, and a non-operating position. In the non-operating position, the injectate collecting container can be cleaned and/or removed completely from the injector.

One injectate collecting container can be sufficient, for example if only one injector module is provided. In the example case of more than one injector modules, for example three injector modules, more than one injectate collecting container can be provided. If two injectate collecting container are present, the two containers can be removed from the front sides of the conveyor module, i.e., on its inlet side and on its outlet side, and reinserted there. If there are more than two injectate collecting containers, the containers arranged between the two front sides of the conveyor module can be removed on the side of the injector apparatus in a direction transverse to the conveying direction defined by the conveyor module and reinserted. A solution involving removal and reinsertion upwards and/or downwards relative to the conveyor module may also be possible.

The design of the inventive injector apparatus allows a quick and easy removal of the injectate collecting container, e.g. for maintenance or cleaning. Moreover, the specific design enables the provision of smaller assemblies and parts, which reduces manufacturing and assembly costs, in particular, the provision of a U-shaped injection tunnel with a complex design, is not necessary. In a preferred embodiment of the injector apparatus, the frame work can include a support and guide arrangement having at least one approximately horizontally arranged support and guide rail for supporting the injectate collecting container in a working position and for guiding the injectate collecting container between a collecting or working position and non-operating position. Thereby, the injectate collecting container may easily be attached to and removed from the injector apparatus. In a preferred embodiment, there are provided at least two support and guide rails arranged inside a tunnel of the framework. Preferably, the two guide rails are arranged at least approximately in the area of the lower corner edges of the tunnel.

In a further preferred embodiment, the support and guide rail can include a securing device for securing or arranging the injectate collecting container on the support and guide rail in a predefined position, preferably, the collecting or working position. In a simple case, the securing device may include at least one stop block at the end of the guide rail, which prevent unintentional sliding of the injectate collecting container on the guide rail, e.g. caused by vibrations during an injection operation. Alternatively or additionally, the securing device may include releasable locking or clamping means, for releasably locking the injectate collecting container in its predefined or working position on the guide rails.

It has to be noted that it is also possible that the one or more support and guide rails may integrally be formed to the frame work or a portion of the frame work, like side plates.

The injectate collecting container may have any suitable design. The injectate collecting container may preferably adapted to the specific design of the injection apparatus, and in particular to the space available below the conveyor module.

Advantageously, the injectate collecting container can have an at least approximately rectangular bottom portion and a wall extending upwardly from the bottom portion and completely surrounding the bottom portion. The injectate collecting container thereby forms a collection space for the injectate escaping from the food product, as well as for particles falling off from the food product. The bottom portion can be designed such that the collected injectate flows to a predetermined location at the bottom portion. For example, the bottom portion can be inclined relative to the horizontal and/or has a V-shaped cross-section. Of course, it may also be possible that the bottom portion has two opposing inclinations and/or V-shaped cross-sections in order to guide the collected injectate to a specific location in or at the bottom portion, for example, to the geometric center of the bottom section.

Further advantageously, the support and guide arrangement can comprise an injectate guide arrangement for guiding injectate escaping from the injector module or the food product being treated, to the injectate collecting container. This design prevents injectate from flowing past the injectate collecting container. In a preferred embodiment, the injectate guide arrangement can be attached at least in sections to preferably vertically extending side walls of the frame work supporting the injectate collecting container, and above the injectate collecting container. The injectate guide arrangement can be formed by at least one strip section, preferably made of sheet metal, which extends diagonally downward relative to the side walls in the direction of the injectate collecting container, similar to a building canopy. Preferably, the guide arrangement may include longitudinally extending elements with an angled or V-shaped cross-sectional profile. The longitudinally extending elements may be arranged on the vertically extending side walls of the frame work, with the open end of the "V" facing downwards, such that one leg of the "V" inclines away from said side walls, such that the longitudinal edge of this leg is positioned above the injectate collecting container. Thereby, injectate flowing down the vertically extending side wally may drip into the injectate collecting container.

In order to guide the injectate collected in the injectate collecting container, in a preferred design, the injectate collecting container can further include a drainage connector for discharging the injectate collected in the injectate collecting container or discharging the injectate from the injectate collecting container. The drainage connector may connect the injectate collecting container to a receptacle, like a further container, in which the injectate is collected, e.g. for being reused.

For enhancing the reuse of the injectate collected in the injectate collecting container, it is further preferred that the injectate collecting device comprises an exchangeable filter unit for filtering the injectate collected by the injection collection device. In a simple design, such a filter unit may include a sieve, for at least removing larger particles from the injectate. However, a finer filter or other treatment devices may be provided, for cleaning the injectate prior reuse.

The filter unit may be placed in any appropriate position between the injectate collecting container and a further collecting container. Advantageously, the filter unit is arranged below the drainage connector of the injection collection container, whereby the injectate may directly flow into the filter unit, e.g. by gravity, without any additional pump unit or the like.

Further advantageously, the filter unit includes a particle collection container, which is preferably removable mounted to the filter unit. Thereby, cleaning of the filter unit is enhanced, and blockages of the filter unit or subsequently arranged devices may be prevented.

In a preferred design, the injector apparatus comprising an injectate delivery device for delivering injectate to the injector module. The injectate delivery device may include a pump unit for pumping injectate from an injectate supply to the injector module. By controlling the operation of the pump unit, pressure and/or flow rate of injectate delivered to the injector module may be adjusted.

The injectate collecting, the filter unit container, coupled to by the drainage connector of the injectate collecting container, the receptacle arranged subsequent to the filter unit, and the injectate delivery device may form an circuit for the injectate, In this circuit, the injectate escaped from the food product, may circulate from the injectate collecting container via the filter unit into the receptacle, which may be a subsequently arranged collecting container, from which the injectate delivery device feeds the injectate to the injector module.

This injectate circuit may further include a delivery arrangement for delivering fresh injectate, which may e.g. be fed into the receptacle or collecting container being arranged subsequently to the filter unit, such that the injectate delivery device feeds the injectate collected by the injectate collecting device as well as fresh injectate to the injectate to the injector module.

The pump can also be provided for sucking the injectate from the injectate collecting container and/or a further container into which the collected injectate is guided from the injectate collecting container for temporary storage and/or purification of the injectate.

The inventive injector apparatus can further comprise a control unit for at least controlling the operation of the injector apparatus. The control unit may be provided with pre-set programs including specific parameters, like the injection speed, the amount of injectate to be injected and/or the injection time, for treating specific food products. Alternatively or additionally, an operator may manually input parameters of an injection process.

In a preferred embodiment, the inventive injector apparatus comprises at least one sensor device including at least a first sensor element for at least detecting the presence or absence of the injectate collecting container in a working position and preferably the level of the collected injectate in the injectate collecting container, which alternatively may be monitored by a second sensor device with a respective sensor element. Thereby, safe operation of the injector apparatus is enabled, and spraying of injectate onto other components of the injector apparatus or into the environment is prevented by preventing an overflow of injectate from the injectate collecting container.

It is of advantage that the sensor device is coupled to the control unit of the injector apparatus. Based on the data received from the sensor device, the control unit may continue the operation or may stop the injector apparatus, e.g. in the case that the supply of injectate in emptied, no food products are positioned on the conveyor module, the filling degree of the injectate collecting container and/or the filter unit has reached a predefined maximum value, i.e. the filter unit is largely filled with filter residues.

In a preferred embodiment of the inventive injector apparatus, the conveying module is removable mounted on the framework. This design allows a quick removal of the conveyor module from the injector apparatus, and further simplifies cleaning and maintenance of the injector apparatus.

There is further disclosed an injector apparatus for injecting an injectate, like brine, into a food product. The apparatus comprises a frame work, at least one injector module supported by the frame work, and at least one conveying module arranged approximately horizontally for conveying a food product to be treated to the injector module and discharging the treated food product from the injector module in a conveying direction. In the injector apparatus, the conveying module has a first deflection assembly with at least a first deflection roller or turning pulley, a second deflection assembly with at least a second deflection roller or turning pulley, and a conveyor belt guided around the first and the second deflection rollers, wherein the first deflection assembly is configured to be de-mountable from the injector apparatus independently from the second deflection assembly.

The design of the injector apparatus allows easy removal of the conveying module, e.g. for maintenance or cleaning, with reduced burden.

In a preferred embodiment of the injector apparatus, the first deflection assembly is configured to reversibly relax or loosen the tension of the conveyor module. Thereby, a tension of the conveyor belt, which preferably is a predefined tension, may automatically be generated or manually adjusted. Moreover, this design allows an easy mounting and demounting of the conveyor belt.

For further enhancing mounting and demounting of the conveyor module, it is of advantage that a pivot axis is arranged between the first and second deflection rollers. This design can enable to pivot at least one of the first or second deflection assemblies, for mounting and demounting the conveyor module to or from the injector apparatus.

In a further advantage design, the first deflection assembly is configured to rotate around a pivot axis extending through the first deflection assembly. This allows an easy tensioning or detensioning or relaxing/loosening of the conveyor belt, whereby mounting and demounting of the conveyor module is further simplified.

It has to be noted that the conveyor belt may be relaxed or detensioned in various ways. Besides pivoting the first or the second deflection assembly, it is also possible to linearly shift one of the first or the second deflection assembly, e.g. by a linear guide device or a telescopic device.

The linear guide may be realized in various ways, e.g. by a dove-tail guide or a T-slot guide. In a simple design, one or more of the guide elements include one or more elongated holes, into which bolts or pins may engage.

In a preferred configuration, the first deflection assembly includes a pivot mechanism for reversibly pivoting the first deflection roller between a working position and a release position, about the pivot axis arranged between the first and second deflection rollers.

The pivot mechanism may include one or more hinges, or may be realized by mounting screws, which are fastened to allow a picot movement about their longitudinal axis.

Tensioning or detensioning the conveyor belt may be executed in various ways. In an advantage configuration, the first deflection assembly is configured to be manually actuated. An automatic or motorized option can also be possible.

Alternatively or additionally, the first deflection assembly includes an actuation device for at least partially automatically actuating first deflection assembly. The actuation device may be configured to support either the pivot movement of the first deflection assembly or may support the tensioning of the conveyor belt during operation. It also possible that the deflection assembly is configured to carry out both functions.

In a preferred embodiment, to put the conveyor belt under a defined tension during operation, the first deflection assembly includes a guide unit for linearly guiding the first deflection roller.

In a further preferred embodiment, at least one securing mechanism is provided for reversibly securing the first deflection assembly at least in one position, preferably a working or operating position. Thereby, safe operation of the injector apparatus is enabled.

The conveying module may be mounted to the injector apparatus in various ways. In an advantage design, the injector apparatus comprising at least a first attachment device by which the first deflection assembly is attached to the injector apparatus, and at least a second attachment device by which the second deflection assembly is attached to the injector apparatus. This allows to separately mount and demount the first and second deflection modules, whereby cleaning and maintenance is simplified.

For further simplifying mounting and demounting of the conveying module, the first and second attachment devices may be configured for tool-less or tool-free mounting and demounting the first and second deflection assemblies to and from the injection apparatus. In a simple case, a clamping mechanism may be provided for tool less mounting and demounting the first and second deflection assemblies.

In a preferred design of the injector apparatus, the conveyor module further includes a support device arranged between the first and second deflection assemblies, for supporting the conveyor belt, at least in the region below the injector module. The support device prevents the conveyor belt from sagging at least during the injection process.

The support devise is preferably arranged between the upper run und the lower run of the conveyor belt, for supporting the upper run. The support device may include a support plate that is arranged immediately below the upper run of the conveyor belt, which slides over the support plate. For reducing friction between the conveyor belt and the support device, at least the surface of the support plate contacting the conveyor belt, may be provided with a friction reducing coating or layer.

The support device, and particularly the support plate, may be fixedly attached to the frame work of the injector apparatus, or may detachable mounted thereto. In a simple case, the frame work of the injection apparatus is provided with support tabs, on which the support plate lays by gravity, or with which it may come into force-fit or form-fit engagement.

Alternatively, the support device is provided with support tabs, which may engage with respective openings in the frame work of the injection apparatus.

The conveyor belt may be of any suitable construction. The conveyor belt may be a conventional flat band made of a textile/rubber composition. In a further preferred design of the injector apparatus, the conveyor belt is a link belt having at least one coupling element, for reversibly opening the conveyor belt. This allows an easy removal of the conveyor belt. Furthermore, fluid, like the injectate, may flow through the gaps between the belt links. It has to be understood that also the coupling element may tool less be removed and assembled.

The injector apparatus can comprise a control unit for at least controlling the operation of the injector apparatus. The control unit may be provided with different programs for treating different products, or an operator may input respective data for treating specific products.

Advantageously, the injector apparatus comprises at least one sensor device at least for detecting the presence or absence of at least one of the first or second deflection assemblies. Thereby, damages to the injector apparatus or production losses may be omitted. The sensor device may further monitor operations, functions or values of the injector apparatus, and may send respective data to the control unit, to which the sensor device is coupled. Based on the signals from the sensor unit, the control unit may control the operation of the injector apparatus, and e.g. may stop the injector apparatus in the case that the conveyor module or components thereof, are not correctly mounted.

There is further disclosed a conveyor module for an injector apparatus for injecting an injectate, like brine, into a food product. The conveyor module includes at least a first deflection assembly with a first deflection roller and a second deflection assembly with a second deflection roller, and a conveyor belt guided around the first and the second deflection rollers, and the first deflection assembly is configured to be mountable and demountable to and from the injector apparatus independently from the second deflection assembly.

In the following, further advantages and embodiments of the inventive injector apparatus und conveyor module are described in conjunction with the attached drawings. Thereby, the expressions "*left*", "*right*", "*below*" and "*above*" are referred to the drawings in an orientation of the drawings, which allows the normal reading of the reference numbers.

In the drawings:
- Fig. 1:: is a perspective view to the front side of an injector apparatus for treating food products, according to the present invention;
- Fig. 2:: is an enlarged perspective partial view to the front side of the injector apparatus according to Fig. 1, in which the conveying module has been removed;
- Fig. 3:: is an enlarged perspective partial view to the front side of the injector apparatus according to Fig. 2, in which the injection collecting container has been removed; and
- Fig. 4:: is a perspective view to the conveying module of the injector apparatus according to Fig. 1.

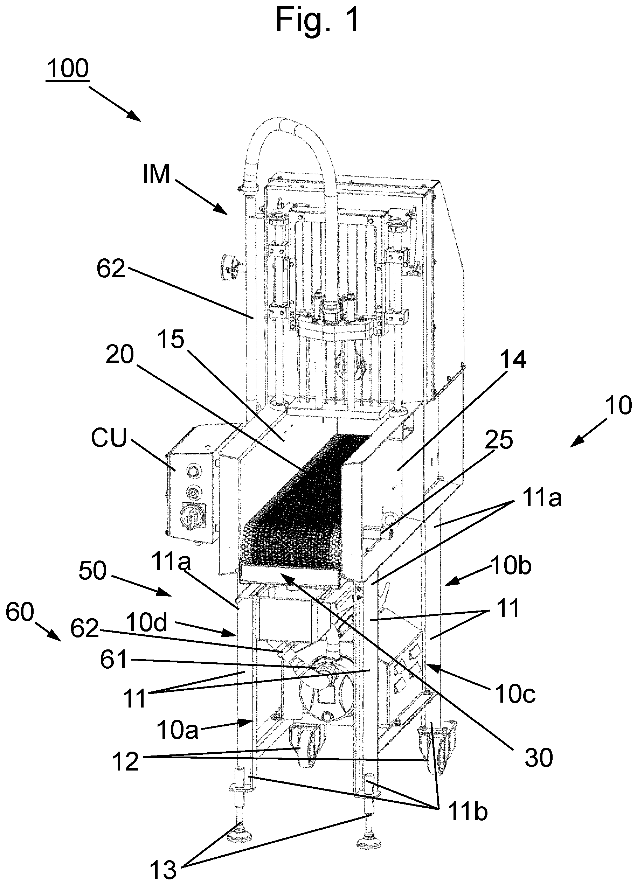

Fig. 1 shows is a perspective view to the front side of an injector apparatus 100 for treating food products, according to the present invention.

Injector apparatus 100 comprises a frame work 10, an injector module IM supported by frame work 10, a conveying module 20 arranged below injector module IM for conveying a food product to be treated to injector module IM and discharging the treated food product from injector apparatus 100 and also supported by frame work 10, and an injection collection or collecting device 30 arranged below conveying module 20 for at least collecting injectate escaping from the food product while being treated. Injector apparatus 100 further comprises a control unit CU for controlling the operation of injector apparatus 100.

Frame work 10, which has a front side 10a, a rear side 10b, a left side 10c and a right side 10d, includes four vertical corner posts 11 with upper ends 11a and lower ends 11b defining an approximately cuboid accommodation space, in which an injectate pump 61 of an injectate delivery device 60 for delivering injectate to injector module IM is arranged. Injectate delivery device 60 further comprises tubing 62 via which injectate pump 61 delivers injectate to injector module IM. Lower ends 11b of rear side corner posts 11 are provided with rollers 12 for moving injector apparatus 100. At lower ends 11b of front side corner posts 11, adjustable feet 13 are arranged for adjusting or levelling injector apparatus 100 at the installation location.

Frame work 10 further includes a first approximately rectangular side plate or housing panel 14 arranged on upper ends 11a of corner posts 11 of right side 10b of frame work 10, and a second approximately rectangular side plate or housing panel 15 arranged on upper ends 11a of corner posts 11 of left side 10a of frame work 10. First and second side plates 14, 15 extend vertically and parallel to each other, with injection module IM supported on their upper edges which are aligned at least approximately horizontally. Between the lower edges of first and second side plates 14, 15, injection collecting device 30 is arranged. Above injection collecting device 30, conveying module 20 is positioned.

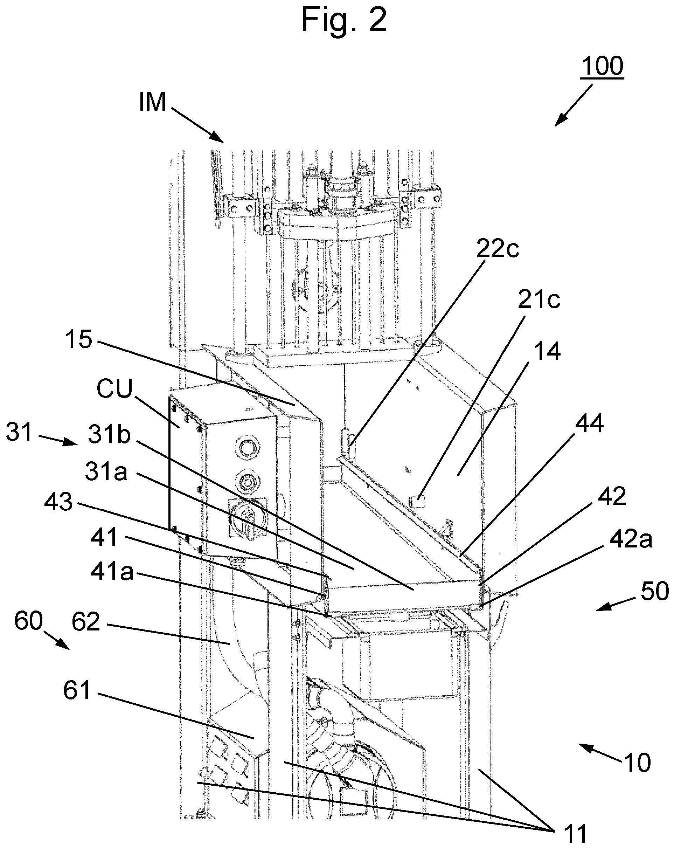

As it particularly can be seen in Fig. 2, injection collecting device 30 includes an approximately cuboid injectate collecting container 31, with a rectangular bottom plate 31a and a surrounding wall or edge 31b, which extends upwardly from bottom plate 31a, for forming a collection space for the injectate escaping from the food product positioned on conveying module 20, or dripping from injector module IM.

Injectate collecting container 31 extends from front side 10a to rear side 10b of frame work 10, and has a width that at least approximately corresponds to the distance between first and second side plates 14, 15. The height of surrounding edge or wall 31b, which is constant over its entire length, may be selected e.g. dependent on the size of injector apparatus 100, the flow rate of injectate to be processed or the expected amount of injectate to be collected by injection collection device 30.

Injectate collection container 31 is provided with an injectate guide arrangement 32 for draining the injectate collected in the injection collection container 31. Injectate guide arrangement 32 includes a drain connector 32a arranged in the region of the front end of injection collection container 31. Injectate guide arrangement 32 may include further elements, like tubing, for connecting drain connector 32a to a further injectate collecting container.

Frame work 10 further includes a support and guide arrangement 40 for supporting and guiding injection collection container 31 in frame work 10.

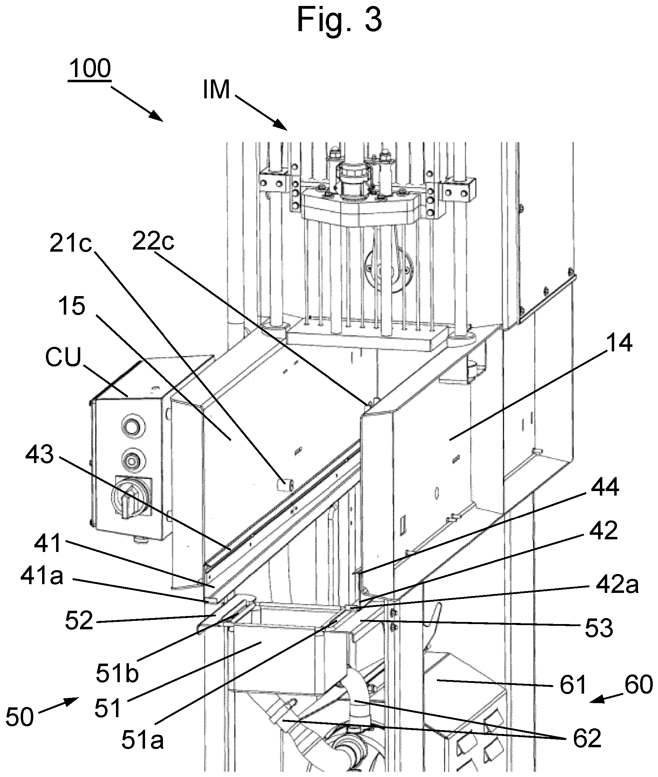

As particularly can be seen in Fig. 3, support and guide arrangement 40 includes two approximately horizontally arranged support and guide rails 41, 42 for supporting injectate collecting container 31 between first and second side plates 14, 15, when positioned in a working or collecting position. Guide rails 41, 42 are mounted to first and second side plates 14, 15 of frame work 10, such that guide rails 41, 42 extend along the lower edges and on the surfaces of first and second side plates 14, 15 facing each other, or the inner surfaces of first and second side plates 14, 15. Guide rails 41, 42 have an approximately L-shaped profile, with the vertical portion of the "L" being mounted to the inner surfaces of first and second side plates 14, 15, and the horizontal portion of the "L" facing towards each other. The horizontal portions of the L-shaped profile of support and guide rails 41, 42 support injectate collecting container 31, whereas the vertical portions of support and guide rails 41, 42 provide lateral guidance.

Guide rails 41, 42 of support and guide arrangement 40 are provided with securing elements 41a, 42a arranged at the ends of guide rails 41, 42, and which extend upwards from the horizontal portions of guide rails 41, 42. In Fig. 3, only securing elements 41a, 42a at the front ends of guide rails 41, 42 are visible. Naturally, also the rear ends of guide rails 41, 42 are provided with respective securing elements. Securing elements 41a, 42a secure injectate collecting container 31 in the collecting position on guide rails 41, 42, and prevent injection collecting container 31 from sliding away from guide rails 41, 42 or outside a tunnel which is defined by side plates 14, 15 and injectate collecting container 31, and which accommodates conveyor module 20, e.g. caused by possible vibrations during the injection operation.

Securing elements 41a, 42a can be detachable and/or adjustable in the longitudinal direction of conveyor module 20, i.e. parallel to the conveying direction defined by conveyor module 20. If injectate collecting device 30 or injectate collecting container 31 is only removed from injector 100 from one end face of conveyor module 20 and then reinserted, securing elements 41a, 42a can be fixed in place on the opposite end face of conveyor module 20.

By means of support and guide arrangement 40, injectate collecting container 31 may reversibly be removed from injector apparatus 100, e.g. for cleaning or maintenance, and reinserted there.

Support and guide rails 41, 42 may further be provided with a coating for reducing friction, at least at the surfaces facing towards or coming into contact with injectate collecting container 31. Said coating may also effect vibration and/or noise damping.

Support and guide arrangement 40 further includes guide elements 43, 44 for guiding injectate flowing along the inner surfaces of first and second side plates 14, 15, i.e. the surfaces facing towards each other, into injectate collecting container 31. Guide elements 43, 44 are longitudinally extending elements with an angled or V-shaped cross-sectional profile. Guide elements 43, 44 are arranged on the inner surfaces of first and second side plates 14, 15 of frame work 10, and extend horizontally from front side 10a to rear side 10b of frame work 10, and approximately parallel above the upper edge of injectate collecting container 31. The length of guide elements 43, 44 at least approximately corresponds to the length of injectate collecting container 31. Guide elements 43, 44 are arranged on first and second side plates 14, 15 with the open end of the "V" facing downwards, such that one leg of the "V" inclines away from first and second side plates 14, 15, such that the longitudinal edge of this leg is positioned above injectate collecting container 31. Thereby, injectate flowing down first and second side plates 14, 15 may drip into injectate collecting container 31.

It has to be understood that guide elements 43, 44, or portions thereof, may also function as support elements for conveyor module 20 arranged above injectate collecting container 31. Alternatively, guide elements 43, 44 may be provided with specific support portions for supporting conveyor module 20.

Injector apparatus 100 further includes a filter unit 50 for filtering injectate collected by injectate collecting container 31. Filter unit 50 is arranged in the front region of frame work 10 and below drain connector 32a of injectate guide arrangement 32.

Filter unit 50 includes a filter container 51, into which the injectate collected by injectate collecting container 31 is guided by drain connector 32a. Filter container 51 has an approximately cuboid shape, and is made of a suitable material, like stainless steel. At its upper end, filter container 51 is provided with two approximately horizontally extending lateral latches 51a, 51b. Two support brackets 52, 53 are mounted in the region of upper ends 11a of corner posts 11 at the front side 10a of frame work 10. Support brackets 52, 53 have an at least approximately horizontal upper portion, for removable supporting filter container 51 below drain connector 32a. Filter container 51 rests on support brackets 52, 53 by its lateral latches 51a, 51b. For securing filter container 51 on support brackets 52, 53, a respective securing mechanism may be provided, which may include clamping means or the like. In a simple case, each of the horizontal upper portions of support brackets 52, 53 may be provided with a respective deepening, into which lateral latches 51a, 51b of filter container 51 may engage.

Filter container 51 is provided with a filter element (not visible) arranged inside filter container 51. Said filter element may be a sieve having a respective mesh size, e.g. dependent on the expected particle size or the viscosity of the injectate, and may be made of a suitable material, like plastic or stainless steel.

Filter container 51 has a connection port (not visible) arranged at its bottom, for connecting filter container 51 to a further container, in which filtered injectate will be collected for further use, like for reusing the filtered injectate in injector apparatus 100 during to current injection process.

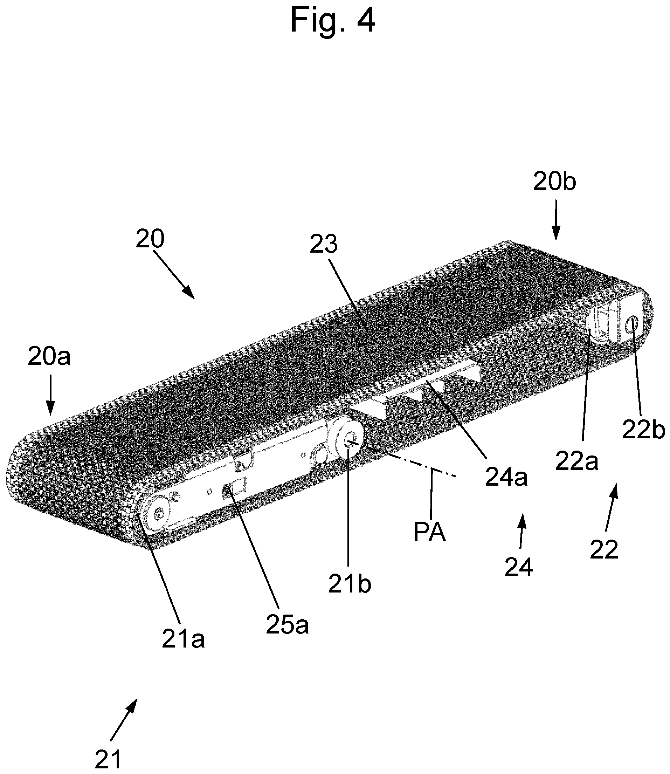

Fig. 4 is a perspective view to conveying module 20 of injector apparatus 100. Conveying module 20 has first end 20a and a second end 20b, and is arranged at least approximately horizontally in injection apparatus 100, with first end 20a facing to front side 10a of frame work 10, and with second end 20b facing to rear side 10b of frame work 10 (cf. Fig.1). Conveying module 20 is reversibly removable mounted on frame work 10.

Conveying module 20 comprises a first deflection assembly 21 with a first deflection roller 21a and a second deflection assembly 22 with at least a second deflection roller 22a, and a conveyor belt 23 guided around the first and the second deflection rollers 21a, 22a.

A support device 24 is arranged between first and second deflection assemblies 21, 22, which includes an at least approximately horizontally arranged support plate 24a, for supporting the upper run of conveyor belt 23, at least in a region below injector module IM.

On both sides of first deflection assembly 21, a mounting element 21b is arranged, that has a mounting whole, and which cooperates with a mounting counter element 21c in the form of a bolt, which engages the mounting whole in mounting element 21b, and which is attached to respective positions on the inner surfaces of first and second side plates 14, 15 of frame work 10 (cf. Figs. 2 and 3).

Second deflection assembly 22 is provided with bearing portions 22b at the outer ends of the axle of deflection roller 22a. Bearing portion 22b has a cuboid shape, which corresponds to the shape of approximately U-shaped receiving elements 22c arranged in the region of rear end 10b and on the inner surfaces of first and second side plates 14, 15 (cf. Figs 2 and 3). The open end of the "U" faces upwards, such that bearing portions 22b may form-fit be inserted into receiving elements 22c.

First deflection assembly 21 includes a pivot mechanism (not shown), which allows first deflection assembly 21 to be pivoted about a pivot axis PA, which extends through mounting elements 21b. Thereby, conveyor belt 23 may be detensioned and removed from conveyor module 20. Thereafter, first and second deflection assemblies and support device 24 may be removed from injector apparatus 100.

A securing mechanism 25 (cf. Figs.1 and 2) is provided at the outside of side plate 13 of frame work 10, and in the region of first deflection assembly 21. securing mechanism 25 includes a securing element (not shown), which may engage a securing opening 25a in first deflection assembly 21, for securing first deflection assembly in a working position as shown in Fig.1, and preventing first deflection assembly 21 from unintentionally pivoting about pivot axis PA.

Injector apparatus 100 may further be provided with a sensor device or sensor assembly (not shown), which includes one or more sensor devices, for monitoring the operation of injector apparatus 100 or components thereof, like injection module IM, conveying module 20 and/or filter unit 50. Said sensor assembly is connected to control unit CU, which may control injector apparatus 100 on the basis of the signals received from the sensor assembly. Control unit CU may continue the operation of injector apparatus 100, e.g. based on one or more specific programs stored in control unit CU, or control unit CU may stop injection apparatus 100, e.g. in the case that one or more sensor signals leave an allowed range. Furthermore, a signal may be sent to an operator, that may include the kind of problem detected by a respective sensor device.

In an injection process, a food product to be treated is conveyed by conveyor module 20 from its first end 20a to its second end 20b. When reaching the injection position, which is the position below injector module IM, conveyor module 20 is stopped, and the injection head of injector module IM is moved downwardly, into a predetermined position, in which the injection needles engage the food product, and a pre-selected amount of injectate in injected into the food product. After the injection process, which may include more than one injection step with regard to the food product to be treated, is finished, the injector head is lifted up, and conveyor module 20 is started for discharging the food product just treated from injector apparatus 100.

During the injection process and/or immediately thereafter, injectate may escape from the food product. Moreover, particles from the food product may fall off, e.g. particles loosened by the injection needles. The injectate escaping from the food product, together with the particles, run down through conveyor module 20 into injectate collecting container 31 arranged below conveyor module 20. Moreover, injectate, caused by the injection pressure, may spray onto the inner surfaces of first and second side plates 14, 15 of frame work 10. The injectate then flows downwards and via guide elements 43, 44 into injectate collecting container 31.

The injectate and the particles collected in injectate collecting container 31 are guided through drain connector 32a of drain guide arrangement 32 into filter container 51 of filter unit 50. In filter unit 50, the particles contained in the injectate are filtered by a respective filter element, like a sieve. The injectate, now free from particles, flows into a container to which filter unit 50 is connected, e.g. by a connection portion arranged at the bottom of filter container 51.

The further injectate container, into which the injectate cleaned by filter unit 50 flows, may be connected to injectate delivery device 60, such that the cleaned injectate may be reused in a further injection process or step in injector apparatus 100.

For cleaning injector apparatus 100, injectate collecting container 31 may be removed from frame work 10. The front end of injectate collecting container 31 has to be lifted such that bottom plate 31a is raised above securing elements 41a, 42a of support and guide rails 41, 42 of support and guide arrangement 40. Then, injectate collecting container 31 may be pulled out of frame work 10, while sliding along support and guide rails 41, 42. Injectate collecting container 31 may now be cleaned.

Prior removing injectate collecting container 31, conveying module 20 may be removed from injector apparatus 100. At first, conveyor belt 23 is detesioned and/or slackened by pivoting first deflection assembly upwardly about pivot axis PA, and conveyor belt 23 may be removing. Then, first and second deflection assemblies may be demounted from injector apparatus 100.

After injector apparatus 100 and all parts of filter unit 50, injection collection device 30 and conveyor module 20 have been cleaned, injectate collection container 31, conveyor module 20 and filter unit 50 may be reassembled to injector apparatus 100, for executing the next injection operation.

After injector apparatus 100 is reassembled, e.g. after injectate collecting device 30 and conveyor module 20 are mounted to injector apparatus 100, and prior an injection operation, a sensor device may e.g. detects injection collection device 30 in the correct position, and sends a respective signal to control unit CU, which allows operation of injector apparatus 100.

Naturally, further sensor devices may be coupled to control unit CU, such that injector apparatus 100 may be controlled on the basis of further sensor signals, which may monitor the presence of further components or functions of injector apparatus 100.

## Claims

1. An injector apparatus (100) for injecting an injectate, like brine, into a food product, the apparatus (100) comprising:
a frame work (10),
at least one injector module (IM), supported by the frame work (10),
at least one conveying module (20), also supported by the frame work (10), for conveying a food product to be treated to the injector module (IM) and discharging the treated food product from the injector module (IM), and
an injectate collecting device (30) for at least collecting injectate escaping from the food product while being treated;
wherein the injectate collecting device (30) includes at least one injectate collecting container (31) being removable mounted to the frame work (10).

2. The injector apparatus (100) according to claim 1,
wherein the frame work (10) includes a support and guide arrangement (40) having at least one approximately horizontally arranged support and guide rail (41, 42) for supporting the injectate collecting container (31) in a collecting position.

3. The injector apparatus (100) according to claim 2,
wherein the support and guide rail (41, 42) includes a securing device (41a, 42a) for securing the injectate collecting container (31) on the support and guide rail (41, 42) in the collecting position.

4. The injector apparatus (100) according to any of claims 1-3,
wherein the injectate collecting container (31) has an at least approximately rectangular bottom portion (31a) and a surrounding wall (31b) extending upwardly from the bottom portion (31a).

5. The injector apparatus (100) according to any of claims 2-4,
wherein the support and guide arrangement (40) further comprises an injectate guide arrangement (43, 44) for guiding injectate escaping from the injector module (IM) and/or the food product being treated, to the injectate collecting container (31).

6. The injector apparatus (100) according to any of claims 1-5,
wherein the injection collection container (31) further includes a drainage connector (32a) for discharging the injectate collected in the injection collection container (31).

7. The injector apparatus (100) according to any of claims 1-6,
wherein the injectate collecting device (30) further comprises a filter unit (50) for filtering the injectate collected by the injection collection device (30).

8. The injector apparatus (100) according to claim 7,
wherein the filter unit (50) is arranged below the drainage connector (32a) of the injection collection container (31).

9. The injector apparatus (100) according to claims 7 or 8,
wherein the filter unit includes a particle collection receptacle (51), which is preferably removable mounted to the filter unit (50).

10. The injector apparatus (100) according to any of claims 1-8,
further comprising an injectate delivery device (60) for delivering injectate to the injector module (IM).

11. The injector apparatus (100) according to any of claims 1-10,
further comprising a control unit (CU) for at least controlling the operation of the injector apparatus (100).

12. The injector apparatus (100) according to any of claims 1-11,
further comprising at least one sensor device including at least a first sensor element for at least detecting the presence or absence the injectate collecting container (31) in a working position.

13. The injector apparatus (100) according to claim 12,
wherein the sensor device further includes a sensor element for detecting the presence or absence of injectate in the injectate collecting device (30).

14. The injector apparatus (100) according to claim 12 or 13,
wherein the sensor device is coupled to the control unit (CU) of the injector apparatus (100).

15. The injector apparatus (100) according to any of claims 1-14,
wherein the conveying module (20) is removable mounted on the framework (10).
